(19) Europäisches Patentamt
European Patent Office
Office européen des brevets

(11) **EP 4 645 118 A1**

(12) **EUROPEAN PATENT APPLICATION**

(43) Date of publication:
**05.11.2025 Bulletin 2025/45**

(51) International Patent Classification (IPC):
**G06F 16/906** (2019.01)    **G06N 3/00** (2023.01)

(21) Application number: **24173315.3**

(52) Cooperative Patent Classification (CPC):
**G06F 16/906; G06N 3/00; G06N 20/00**

(22) Date of filing: **30.04.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Schirmer, Mona
1051 JL Amsterdam (NL)**
• **Nalisnick, Eric
1086 ZR Amsterdam (NL)**
• **Zhang, Dan
71229 Leonberg (DE)**

Remarks:
Amended claims in accordance with Rule 137(2) EPC.

(54) **COMPUTER-IMPLEMENTED METHOD FOR CLASSIFYING DATA ELEMENTS OF A DATA SET USING A MACHINE-LEARNING MODEL**

(57)     A computer-implemented method (200) for classifying data elements of a data set using a machine-learning model includes: classifying the data elements of the data set associated with a time sequence, wherein each data element is associated with a corresponding time step of the time sequence, wherein the data elements are classified by inputting them into the machine-learning model one after the other according to their temporal order, wherein classifying a respective data element of the data elements includes: determining features of the respective data element using a feature extractor of the machine-learning model; determining, using the features of the respective data element and the features of one or more other data elements temporally preceding the respective data element, parameters of a feature-dynamics-model which represents an evolution of a feature density of the features over time; and determining a class associated with the respective data element using the feature-dynamics-model.

Fig. 3

EP 4 645 118 A1

**Description**

Prior Art

Machine-learning models can be used in many computer-controlled applications to carry out classification tasks. Prior to its use, a machine-learning model can be trained using (e.g., labeled) training data. To get a performance of the pre-trained machine-learning model, the machine-learning model can be tested using (non-labeled) test data different from the training data. The (e.g., sensor) data which are used for testing the machine-learning model and/or which are input into the machine-learning model during use after testing (also referred to as use data), may differ from the training data. For example, there may be a covariate shift between the training data and the testing and/or (real-world) use data due to differences in the distributions of their features. This covariate shift may lead to a classification error and, therefore, to a worse classification performance of the machine-learning model.

Disclosure of the Invention

According to various embodiments, a computer-implemented method for classifying data elements of a data set using a (pre-trained) machine-learning model is provided which allows to compensate the classification error resulting from a shifting feature distribution.

The machine-learning model may include a feature extractor configured to determine (e.g., extract) features (e.g., represented by a feature vector) of a data element and a (e.g., linear) classifier (e.g., a neural network classifier) configured to classify the data element using the features. The computer-implemented method may include: classifying the data elements of the data set which is associated with a (continuous or discontinuous) time sequence, wherein each data element is associated with a corresponding time step of the time sequence, wherein the data elements are classified by inputting (e.g., inferring) them into the (pre-trained) machine-learning model one after the other according to their temporal order, wherein classifying a respective data element of the data elements includes: determining features of the respective data element using the feature extractor; determining, using the features of the respective data element and the features of one or more other data elements temporally preceding the respective data element, parameters of a feature dynamics model which represents an evolution of a feature density of the features over time; and determining a class associated with the respective data element using the feature dynamics model.

It has been found that in many applications the (covariate) distribution shift takes place in a continuous manner. For example, in the case that the data are acquired over time, the features extracted from the data may shift over time. As an example, the data may include a temporal stream of images which show driving scenes in a surrounding of a (e.g., at least partially automated) vehicle; in this case, there may be a distribution shift due to changing weather conditions. As another example, the data may result from sensor measurements which are carried out over time on a changing environment, such as in climate science, medical applications, home devices, etc. For temporally acquired sensor data in general there may be a distribution shift due to sensor degradation.

The above method takes advantage of a gradual nature of the distribution shift by modelling an evolution of the feature density of the features over time. By this, the dynamics of the distribution shift can be tracked and the machine-learning model can be adapted to the distribution shift. This allows to significantly reduce the classification error resulting from distribution shift, thereby improving the classification performance of the machine-learning model.

In the following, various examples are described.

Example 1 is the method for classifying data elements of a data set as described above.

In Example 2, the subject matter of Example 1 can optionally include that determining the class associated with the respective data element using the feature dynamics model includes: adapting, using the feature dynamics model, (current) weights (e.g., weights of the directly preceding time step) of the classifier; and determining the class associated with the respective data element using the classifier having the adapted weights.

In Example 3, the subject matter of Example 2 can optionally include that adapting the weights using the feature dynamics model, includes: adapting the weights of the classifier which are associated with the directly preceding time step as a function of a feature distribution shift (in feature space) between the features of the data element associated with the directly preceding time step and the features of the respective data element.

Examples 2 and 3 allow to adapt the weights of the classifier in accordance with the distribution shift to compensate the distribution shift. The gradual nature of the distribution shift may result in a gradual adaption of the weights with changing feature density over time.

In Example 4, the subject matter of Example 2 or 3 can optionally include that determining the class associated with the respective data element using the feature dynamics model includes: for each class of a plurality of classes associated with the classification, determining, using the feature dynamics model, a (inferred) posterior class probability representing a probability that the class is associated with the respective data element; determining an entropy value representing an entropy of the (determined) posterior class probabilities; and adapting the weights of the classifier only in the case that the entropy value is equal to or less than a predefined entropy threshold value.

In some cases, there may be no gradual distribution shift but a hard distribution shift, for example due to a sensor malfunction, measurement errors, etc. As another example, a machine-learning model for speech recognition may be a trained on native speakers and then applied to a non-native speaker which may results in a hard (covariate) distribution shift. Example 4 allows to skip in adaption of the classification weights in the case of such hard distribution shifts by defining an entropy threshold value. However, it is noted that the method disclosed herein allows to reduce the classification error even in the case of a hard distribution shift.

In Example 5, the subject matter of Example 1 can optionally include that determining the class associated with the respective data element using the feature dynamics model includes: for each class of a plurality of classes associated with the classification, determining, using the feature dynamics model, a (inferred) posterior class probability representing a probability that the class is associated with the respective data element; and determining the class of the plurality of class for which the greatest posterior class probability is determined as the class associated with the respective data element. This allows to obtain the class directly from the feature dynamics model without employing the classifier, thereby reducing the computational cost.

In Example 6, the subject matter of any one of Examples 1 to 5 can optionally include that determining the feature dynamics model includes: modeling the evolution of the feature density of the features over time by a Gaussian mixture model with a respective Gaussian function for each class of a plurality of classes associated with the classification, wherein the evolution of a respective mean of each Gaussian function is modeled as a linear Gaussian system with its parameters being tracked by a corresponding Kalman filter. Using the Kalman filters allows to track the parameters of the feature dynamics model and, thus, to track the evolution of the feature density.

In Example 7, the subject matter of Example 6 can optionally include that the parameters of the feature dynamics model are determined using an expectation-maximization algorithm, wherein the expectation step of the expectation-maximization algorithm includes a Kalman forward-backward-recursion.

In Example 8, the subject matter of Example 6 or 7 can, provided that in combination with Example 3, optionally include that the weights are adapted by: determining a (inferred) posterior distribution over the means of the Gaussian functions associated with the corresponding time step of the respective data element; and adapting the weights which are associated with the directly preceding time step as a function of the posterior distribution (e.g., using the means as weights or using the posterior distribution of the means as weights).

In Example 9, the subject matter of Example 8 can optionally include that the features of a respective data element are represented by a feature vector; and wherein adapting the weights associated with the directly preceding time step as a function of the posterior distribution further includes a normalization of the weights by dividing them with a (vector) length of the feature vector. This may improve accuracy of the classification.

In Example 10, the subject matter of any one of Examples 1 to 9 can optionally include that the (pre-trained) machine-learning model has been trained using a training data set which is associated with a prior time sequence or a point in time that temporally precedes the time sequence associated with the data set.

In Example 11, the subject matter of any one of Examples 1 to 10 can optionally include that the one or more other data elements temporally preceding the respective data element include: all data elements temporally preceding the respective data element; or a predefined number of data elements temporally directly preceding the respective data element. Using not all, but a predefined number of data elements allows to reduce the computation cost.

In Example 12, the subject matter of any one of Examples 1 to 11 can optionally include that the corresponding time step the data element which temporally directly succeeds the respective data element is associated with is temporally after a point in time at which the respective data element is classified.

Example 13 is a data processing device configured to carry out the method of any one of Examples 1 to 12.

Example 14 is a computer program including instructions which, when executed by a computer, causes the computer to carry out the method according to any one of Examples 1 to 12.

Example 15 is a computer-readable medium including instructions which, when executed by a computer, causes the computer to carry out the method according to any one of Examples 1 to 12.

Example 16 is a method for controlling a robot device (e.g., a vehicle or any other robotic device) including: acquiring sensor data, which represent one or more objects (e.g., an image showing the one or more objects), over time; feeding the sensor data associated with a respective point in time (as a data element) into the machine-learning model for classification according to the method of any one of Examples 1 to 12; and controlling the robot device taking into account a result of the classification.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows an at least partially automated vehicle according to various aspects;
Figure 2 shows a flow diagram of a computer-implemented method using a machine-learning model according to various aspects; and
Figures 3 and 4 each show an exemplary flow chart illustrating the computer-implemented method according to various aspects.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

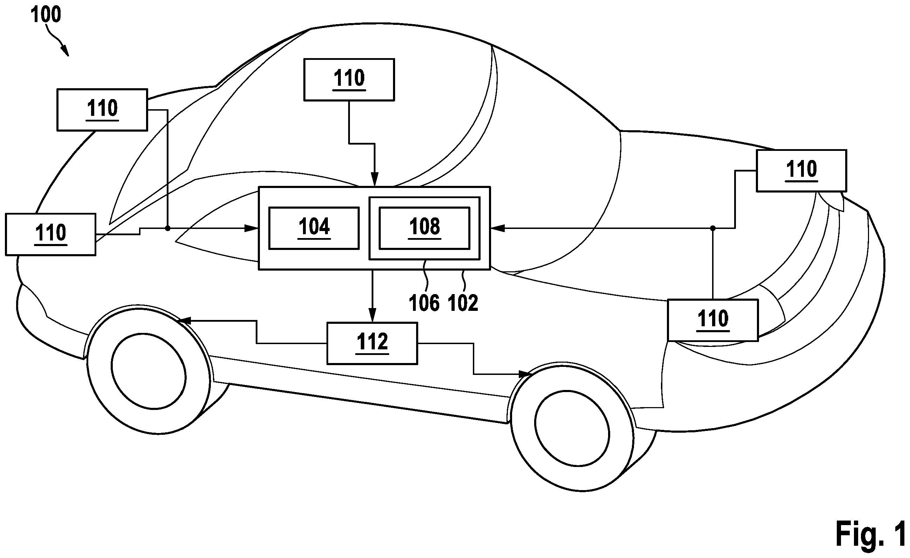

**FIG.1** shows an at least partially automated vehicle 100 according to various aspects. The at least partially automated vehicle 100 shown in FIG.1 and described below by way of example is an exemplary computer-controlled device serving for illustration. Thus, although various aspects of the computer-implemented method are detailed with reference to the vehicle 100, it is understood that this serves for illustration and that any other computer-controlled device may employ the computer-implemented method detailed herein. Another computer-controlled device may be, for example, a robotic device (short: robot), such as an industrial robot (e.g., in the form of a robot arm for moving, assembling or machining a workpiece, for bin-picking, etc.), a manufacturing robot, a maintenance robot, a domestic robot, a medical robot, a domestic appliance, a production machine, a personal assistant, an access control system, a system for conveying information (such as a surveillance system or a medical (imaging) system), etc., as well as any other type of computer-controlled device.

For control of the vehicle 100, the vehicle 100 may include a (vehicle) controller 102 configured to implement an interaction with an environment of the vehicle 100 according to a control program. The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a vehicle in the present example.

In the present example, the controller 102 may include one or more processors 104 and a memory 106 storing code and data based on which the processor 104 controls the vehicle 100. According to various embodiments, the controller 102 controls the vehicle 100 on the basis of a machine-learning model 108 stored in the memory 106. According to various aspects, the machine-learning model 108 may be generated (e.g., learned or trained) while the vehicle 100 is inoperative. The generated machine-learning model 108 may be used during operation of the vehicle 100 to determine driving tasks to be performed by the vehicle 100.

To be able to control a driving task of the vehicle 100, the controller 102 may use sensor data which represent a surrounding (e.g., an environment) of the vehicle 100. For this, the vehicle 100 may include one or more sensors 110 each providing respective sensor data that represent at least part of the surrounding of the vehicle 100. A sensor of the one or more sensors 110 may be, for example, an imaging sensor and/or proximity sensor, such as a camera (e.g., a standard camera, a digital camera, an infrared camera, a stereo camera, etc.), a radar sensor, a LIDAR sensor, an ultrasound sensor, etc. A sensor of the one or more sensors 110 may be configured to acquire an image showing at least part of the surrounding of the vehicle 100. An image may be an RGB image, an RGB-D image, or a depth image (also referred to as a D image). A depth image described herein may be any type of image that includes (3-dimensional) depth information. Illustratively, a depth image may have information about one or more objects in the surrounding of the vehicle 100. For example, a depth image described herein may include a point cloud provided by a LIDAR sensor and/or a radar sensor. For example, a depth image may be an image with depth information provided by a LIDAR sensor. It is understood that the vehicle 100 may further include other sensors, such as a Global Navigation Satellite System (GNSS, e.g., a Global Positioning System, GPS), a speedometer, an altimeter, a gyroscope, a velocity sensor, etc., and the controller 102 may also employ sensor data provided by these other sensors for control of the vehicle 100. The controller 102 may be configured to control the vehicle 100 based on an output of the machine-learning model 108 responsive to inputting the sensor data into the machine-learning model 108.

The vehicle 100 may include a driving device 112 for driving the vehicle 100. The controller 102 may be configured to determine, using an output of the machine-learning model 108, a control parameters for controlling the vehicle 100. The controller 102 may be configured to control an operation of the vehicle 100 (e.g., by controlling the driving device 112 via a control signal) in accordance with the control parameters.

The at least partially automated vehicle 100 may be an automated vehicle or an autonomous vehicle. A level of autonomy of a vehicle may be described or determined by the Society of Automotive Engineers (SAE) level of the vehicle (e.g., as defined in SAE J3016). For example, the at least partially automated vehicle 100 may be a partially automated vehicle (according to SAE level 2), a highly automated vehicle (according to SAE level 3), a fully automated vehicle (according to SAE level 4) or an autonomous vehicle (according to SAE level 5).

An at least partially automated vehicles can, in general, take over driving tasks autonomously. To ensure the safety of occupants and other road users (e.g., cyclists, pedestrians, etc.), it is necessary for systems that perform driving tasks autonomously to be highly safety-critical.

The vehicle 100 may employ the machine-learning model 108 for classification tasks (e.g., for image segmentation as part of object recognition in a surrounding of the at least partially automated vehicle 100). As detailed herein, there may be a distribution shift within the sensor data due to sensor degradation, changing weather conditions, etc. resulting in a classification error and, thus, inaccurate classification results. Such inaccurate classification results may, for example, lead to a misjudgment of driving situations and, thus, to safety issues.

The computer-implemented method disclosed herein allows to compensate this classification error resulting from a shifting feature distribution, thereby improving the classification performance of the machine-learning model. In the present example of the vehicle 100, the improved classification performance of the machine-learning model 108 may improve the safety of the overall system.

It is noted that the vehicle 100 serves as an exemplary computer-controlled device to illustrate various aspects of the disclosed method and that the method can be used by any type of computer-controlled device.

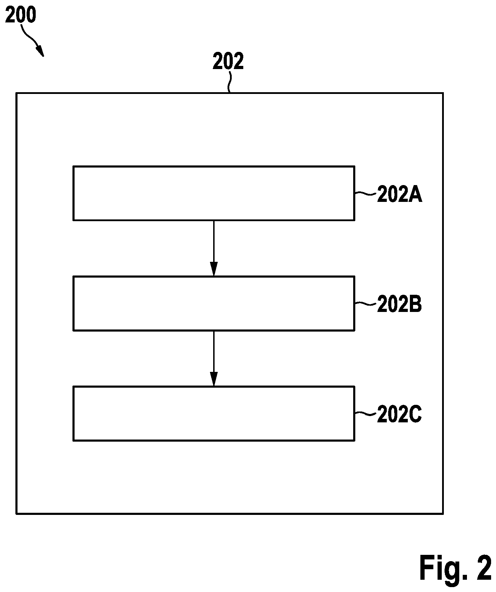

**FIG.2** shows a flow diagram of a (computer-implemented) method 200 for training the machine-learning model according to various aspects.

The method 200 may include (in 202) classifying data elements of the data set which is associated with a (continuous or discontinuous) time sequence with each data element being associated with a corresponding time step of the time sequence.

The data elements may be classified by inputting (e.g., inferring) them into the (pre-trained) machine-learning model one after the other according to their temporal order. It is understood that a respective data element associated with its corresponding time step may be classified before, at, or after the point in time at which the data element that temporally directly succeeds the respective data element is acquired.

Classifying a respective data element of the data elements (in 202) may include determining features of the respective data element using the feature extractor (in 202A). Classifying the respective data element of the data elements (in 202) may include determining, using the features of the respective data element and the features of one or more other data elements temporally preceding the respective data element, parameters of a feature dynamics model which represents an evolution of a feature density of the features over time (in 202B). Classifying the respective data element of the data elements (in 202) may include determining a class associated with the respective data element using the feature dynamics model (in 202C).

It is noted that this is different from (continuous) online learning which requires a respective label for each data element in order to adapt (train) the model after inference.

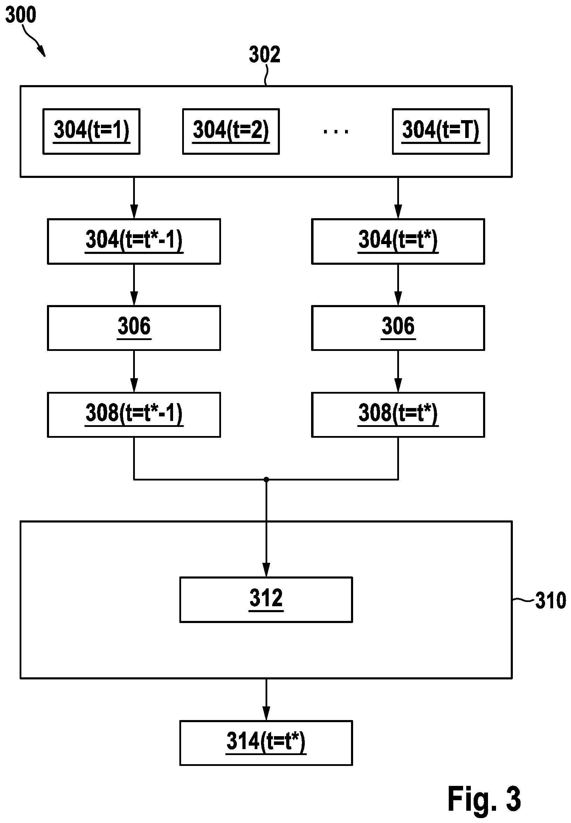

**FIG.3** shows an exemplary flow chart 300 illustrating various aspects of the computer-implemented method 200.

The machine-learning model (e.g., the machine-learning model 108) may be any kind of machine-learning having a feature extractor 306. The feature extractor 306 may be configured to determine (e.g., extract) features (e.g., represented by a feature vector) of a data element 304. The machine-learning model may include a (e.g., linear) classifier 402 (e.g., a neural network classifier) configured to classify the data element using the extracted features. The classifier 402 may also be referred to as (e.g., task-specific) classification head. As an example, the machine-learning model may be a foundation model.

In general, the method 200 may include a classification of data elements 304(t) of a data set 302. The data set 302 may be associated with (continuous or discontinuous) time sequence from time step t=1 to time step T. Each data element 304(t) may be associated with a corresponding time step (t*) of the time sequence (t=1 to T). The data elements 304(t) may be classified one after the other according to their temporal order. Hence, the data element 304(t=t*) may be classified after a directly preceding data element 304(t=t*-1) and prior to a directly succeeding data element 304(t=t*+1). Herein the *-notation may define one specific integer of the time step t (e.g., t=1, t=2, etc.). As detailed herein, it is understood that a respective data element 304(t=t*) associated with its corresponding time step t* may be classified before, at, or after the point in time at which the data element 304(t=t*+1) that temporally directly succeeds the respective data element 304(t*) is acquired. Thus, the temporal analysis (e.g., classification) is detached from the temporal recording of the data elements 304. The classification may include to determine a class k of a plurality of classes k=1 to K (with K being any integer number equal to or greater than two).

In the following, various aspects of the classification of a respective data element 304(t=t*) are described.

The respective data element 304(t) at a time t may be represented by $X_t = \{\mathbf{x_{n,t}}\}_{n=1}^{N_t}$ *with* $\mathbf{x_{n,t}} \in R^M$. The respective data element 304(t=t*) may be input into the feature extractor 306 to extract the corresponding features 308(t=t*). These features 308(t=t*) may be used to determine parameters 312 of a feature dynamics model 310.

The feature dynamics model 310 may represent an evolution of a feature density of the features 308 over time t. The feature dynamics model 310 may assume that the features 308(t=t*) at time t=t* are a number $N_t$ samples from a random variable $\phi_t$. The feature dynamics model 310 may model the evolution of the feature density of the features 308 over time t by a Gaussian mixture model with a respective Gaussian function for each class, k, of a plurality of classes, k=1 to K, associated with the classification. With this, the features $\phi_t$ 308(t=t*) (e.g., represented by a feature vector

$$\Phi_T = \{\phi_{n,t}\}_{n=1}^{N_t} \quad \phi_{n,t} \in R^{D}$$

) may be modeled by equation (1):

$$\phi_t \sim \sum_{k=1}^{K} \pi_{t,k} \mathcal{N}\left(\phi \middle| m_{t,k}, \Sigma^{obs}\right) \tag{1},$$

with mixing weights $\pi_{t,k}$ (in some aspects referred to as cluster weights), class mean vector $m_{t,k} \in R^D$ (of a respective class k), and an (global) observation covariance $\Sigma^{obs} \in R^{D \times D}$. The K mixing weights $\pi_{t,k}$ may give class proportions at time t with

$$\pi_t = \{\pi_{t,k}\}_{k=1}^{K} \quad \text{with} \quad \sum_{k=1}^{K} \pi_{t,k} = 1.$$

The feature dynamics model 310 may be capable to track the evolution of the feature density of the features 308 over time t by considering a covariate shift. For this, the evolution of a respective mean of each Gaussian function may be modeled as a linear Gaussian system with its parameters being tracked by a corresponding Kalman filter.

Illustratively, the evolution of the feature density of the features 308 over time t may be modeled as a linear drift of the class mean vector $m_{t,k}$ in accordance with equation (2):

$$m_{t,k} = A_k m_{t-1,k} + v \text{ with } v \sim \mathcal{N}(0, \Sigma^{trans}) \tag{2},$$

wherein $A_k \in R^{D \times D}$ denotes a class-specific transition matrix for class k, $v$ a time- and class-independent Gaussian noise component with zero-mean and a transition covariance $\Sigma^{trans} \in R^{D \times D}$. Illustratively, the evolution of the class mean vector $m_{t,k}$ may be modeled by a mixture of K Kalman filters.

In some aspects, one or more of the transition matrix $A_k$, the transition covariance $\Sigma^{trans}$, and/or the observation covariance $\Sigma^{obs}$ may be class-independent and/or time-invariant. In other aspects, at least one of these parameters may be class-dependent and/or time-variant.

The feature dynamics model 310 may also model the classifier 402 of the machine-learning model considering a latent class assignments $c_t$ at time t: $$c_t = \{c_{n,t}\}_{n=1}^{N_t}$$ with $c_{n,t} \in \{1, ..., K\}$.

Illustratively, the feature dynamics model 310 may have the parameters $\theta$ 312

$$\theta = \{\Sigma^{trans}, \Sigma^{obs}, \{\pi_t\}_{t=1}^{T}, \{\Sigma_{0,k}, \mu_{0,k}, A_k\}_{k=1}^{K}\}$$

which may be determined using the features 308(t) at time t. As an example, the parameters $\theta$ 312 of the feature dynamics model 310 may be determined using an expectation-maximization (EM) algorithm. The expectation step of the expectation-maximization algorithm may include a Kalman forward-backward-recursion. In the expectation step, a posterior class probability $p(c_{n,t} = k|\phi_{n,t}, \theta)$ and a posterior distribution $p(m_{t,k}|\Phi_1, ..., \Phi_T)$ over the means $m_{t,k}$ of the Gaussian functions may be inferred. In the maximization step, the expected complete log-likelihood with respect to each of the parameter $\theta$ may be maximized.

The parameters $\theta$ 312 may be determined using algorithm (1):

---

--------

Algorithm 1:

---

--------

Initialize $\Sigma^{trans}$, $\Sigma^{obs}$, $\{\pi_t, M_t\}_{t=1}^T$, $\{\Sigma_{0,k}, \mu_{0,k}, A_k\}_{k=1}^K$

repeat

    Expectation step:

        for $\{k = 1, ..., K\}$ do

            for $t = 1, ..., T$ do

                Determine (e.g., Update) posterior class probability

                $p\left(c_{n,t} = k \middle| \phi_{n,t}, \hat{\theta}\right)$ (e.g., by Equation (3))

            end for

            Do Kalman forward backward-recursion

        end for

    Maximization step:

        for $k = 1, ..., K$ do

            for $t = 1, ..., T$ do

                Determine mixing weights $\pi_{t,k}$ (e.g., by Equation (4))

            end for

        Determine $A_k$ (e.g., by Equation (5))

        end for

    Determine $\Sigma^{trans}$ (e.g., by Equation (6))

    Determine $\Sigma^{obs}$ (e.g., by Equation (7))

until convergence

---

--------

The complete data likelihood may be given by

$$p(\{\Phi_T, c_t, M_t\}_{t=1}^T | \theta) = p(M_1|\theta)\left[\prod_{t=2}^T p(M_t|M_{t-1}, \theta)\right]\left[\prod_{t=1}^T p(c_t|\theta)\right]\left[\prod_{t=1}^T p(\Phi_t|M_t, c_t, \theta)\right]$$

$$= \prod_{k=1}^K p(m_{1,k}|\theta)\left[\prod_{t=2}^T \prod_{k=1}^K p(m_{t,k}|m_{t-1,k}, \theta)\right]\left[\prod_{t=1}^T \prod_{n=1}^{N_t} p(c_{n,t}|\theta)\right]\left[\prod_{t=1}^T \prod_{n=1}^{N_t} p(\phi_{n,t}|m_{t,c_{n,t}}, \theta)\right].$$

The complete data log-likelihood may be given by

$$\log p\left(\{\Phi_T, c_t, M_t\}_{t=1}^T \middle| \theta\right) = \sum_{k=1}^K \log\{p\}(m_{1,k}|\theta + \sum_{t=2}^T \sum_{k=1}^K \log\{p\}(m_{t,k}|m_{t-1,k}, \theta), \text{ and}$$

$$\log p\left(\{\Phi_T, c_t, M_t\}_{t=1}^T \middle| \theta\right)$$

$$= \sum_{k=1}^K \log \mathcal{N}\left(m_{1,k}|\mu_{0,k}, \Sigma_{0,k}\right) + \sum_{t=2}^T \sum_{k=1}^K \log \mathcal{N}\left(m_{t,k}|A_k m_{t-1,k}, \Sigma^{trans}\right)$$

$$+ \sum_{t=1}^T \sum_{n=1}^{N_t} \log \pi_{c_{n,t}} + \sum_{t=1}^T \sum_{n=1}^{N_t} \log \mathcal{N}\left(\phi_{n,t}|m_{t,c_{n,t}}, \Sigma^{obs}\right).$$

The expectation-maximization (EM) algorithm may be given by

$$\mathcal{Q}\left(\theta, \hat{\theta}\right) = \mathbb{E}_{p\left(c, m\middle|\{\Phi_T\}_{t=1}^T, \hat{\theta}\right)}\left[\log p\left(\{\Phi_T, c_t, M_t\}_{t=1}^T \middle| \theta\right)\right]$$

$$= \mathbb{E}_{p\left(m\middle|\{\Phi_T\}_{t=1}^T, \hat{\theta}\right)}\left[\sum_{k=1}^K \log p(m_{1,k}|\theta) + \sum_{t=2}^T \sum_{k=1}^K \log\{p\}(m_{t,k}|m_{t-1,k}, \theta)\right]$$

$$+ \sum_{k=1}^K \sum_{t=1}^T \sum_{n=1}^{N_t} p\left(c_{n,t} = k\middle|\phi_{n,t}, \hat{\theta}\right)(\log\{p\}(c_{\_}\{n,t\}$$

$$= k | \theta) + \mathbb{E}_{p\left(m\middle|\{\Phi_T\}_{t=1}^T, \hat{\theta}\right)} \log\{p\}(\phi_{n,t}|m_{t,k}\theta))$$

$$= \sum_{k=1}^K \log \mathcal{N}\left(m_{1,k}|\mu_{0,k}, \Sigma_{0,k}\right) + \sum_{t=2}^T \sum_{k=1}^K \log \mathcal{N}\left(m_{t,k}|A_k m_{t-1,k}, \Sigma^{trans}\right)$$

$$+ \sum_{k=1}^K \sum_{t=1}^T \sum_{n=1}^{N_t} p(c_{\_}\{n,t\}$$

$$= k |\phi_{n,t}, \hat{\theta}) (\log \pi_{t,k} + \mathbb{E}_{p(m|\{\Phi_T\}_{t=1}^T\hat{\theta})}[\log \mathcal{N}\left(\phi_{n,t}|m_{t,k}, \Sigma^{obs}\right)]).$$

The posterior class probability $p(c_{n,t} = k|\phi_{n,t}, \hat{\theta})$ may be determined by equation (3):

$$p\left(c_{n,t} = k\middle|\phi_{n,t}, \hat{\theta}\right) = \frac{p\left(c_{n,t} = k\middle|\hat{\theta}\right)p\left(\phi_{n,t}\middle|c_{n,t}, \hat{\theta}\right)}{\sum_{j=1}^K p\left(c_{n,t} = j\middle|\hat{\theta}\right)p\left(\phi_{n,t}\middle|c_{n,t} = j, \hat{\theta}\right)}$$

$$= \frac{\pi_{t,k}\left|\widehat{\Sigma^{obs}}\right|^{-\frac{1}{2}}\exp\left(-\frac{1}{2}\left(\phi_{n,t} - \widehat{m_{t,k}}\right)^T\left(\widehat{\Sigma^{obs}}\right)^{-1}\left(\phi_{n,t} - \widehat{m_{t,k}}\right)\right)}{\sum_{j=1}^K \pi_{t,j}\left|\widehat{\Sigma^{obs}}\right|^{-\frac{1}{2}}\exp\left(-\frac{1}{2}\left(\phi_{n,t} - \widehat{m_{t,j}}\right)^T\left(\widehat{\Sigma^{obs}}\right)^{-1}\left(\phi_{n,t} - \widehat{m_{t,j}}\right)\right)} \quad (3).$$

An expectation value of the posterior class probability $p(c_{n,t} = k|\phi_{n,t}, \hat{\theta})$ may give the class mean $m_{t,k}$.

The forward recursion of the Kalman forward backward-recursion may include a determination of a prior distribution $p(m_{t,k}|\Phi_1, ..., \phi_{t-1})$ over the means $m_{t,k}$ of the Gaussian functions by

$$\left(m_{t,k}\middle|\Phi_1, ..., \phi_{t-1}\right) = \mathcal{N}\left(m_{t,k}\middle|\mu_{t,k}^-, \Sigma_{t,k}^-\right) \text{ with } \mu_{t,k}^- = A_k\mu_{t-1,k}^+ \text{ and } \Sigma_{t,k}^- = \Sigma^{trans} + A_k\Sigma_{t-1,k}^+ A_k^T.$$ A sample-wise posterior $p(m_{t,k}|\Phi_1, ..., \phi_{t-1}, \phi_{n,t})$ may be given by

$$p\left(m_{t,k}\middle|\Phi_1, ..., \phi_{t-1}, \phi_{n,t}\right) = \mathcal{N}\left(m_{t,k}\middle|\mu_{n,t,k}^+, \Sigma_{n,t,k}^+\right).$$ for all $n = 1, ..., N_t$ with $\mu_{n,t,k}^+ =$

$$\Sigma_{t,k}^+\left(\left(\Sigma_{t,k}^-\right)^{-1}\mu_{t,k}^- + p\left(c_{n,t} = k\middle|\phi_{n,t}, \theta\right)\left(\Sigma^{obs}\right)^{-1}\phi_{n,t}\right) \text{ and } \Sigma_{n,t,k}^+ = \left(\left(\Sigma_{t,k}^-\right)^{-1} + p(c_{n,t} = k|\phi_{n,t}, \theta)\right.$$

$(\Sigma^{obs})^{-1})^{-1}$. An aggregated posterior over all observations at time t may be given by any suitable approach, such as a Gaussian mixture where the mixing weights $\alpha_{n,t}$ *being* normalized

$$p\big(m_{t,k}\big|\Phi_1, \ldots, \Phi_t\big) = \sum_{n=1}^{N_t} \alpha_{n,t} p\big(m_{t,k}\big|\Phi_1, \ldots, \Phi_{t-1}, \phi_{n,t}\big) \text{ with } \alpha_{n,t} = \frac{p(c_{n,t} = k|\phi_{n,t}, \theta)}{\sum_{i=1}^{N_t} p(c_{i,t} = k|\phi_{i,t}, \theta)}. \text{ This results}$$

in an aggregated posterior mean $\mu_{t,k}^+$ and covariance $\Sigma_{t,k}^+$ of $\mu_{t,k}^+ = \sum_{n=1}^{N_t} \alpha_{n,t} \mu_{n,t,k}^+$ and

$$\Sigma_{t,k}^+ = \sum_{n=1}^{N_t} \alpha_{n,t} \Sigma_{n,t,k}^+ + \sum_{n=1}^{N_t} \alpha_{n,t}\big(\mu_{n,t,k}^+ - \mu_{t,k}^+\big)\big(\mu_{n,t,k}^+ - \mu_{t,k}^+\big)^T.$$

The backward recursion of the Kalman forward backward-recursion may allow to determine a smoothed posterior $p(m_{t,k}|\Phi_1, \ldots, \Phi_T) = \mathcal{N}(m_{t,k}|\mu_{t,k}, \Sigma_{t,k})$ with $\mu_{t,k} = \mu_{t,k}^+ +$

$$J_{t,k}\big(\mu_{t+1,k} - A_k \mu_{t,k}^+\big), \Sigma_{t,k} = \Sigma_{t,k}^+ + J_{t,k}\big(\Sigma_{t+1,k} - \Sigma_{t,k}^-\big)J_{t,k}^T, \text{ and } J_{t,k} = \Sigma_{t,k}^+ A_k^T\big(\Sigma_{t,k}^-\big)^{-1}.$$

In the maximization step, the $Q(\theta, \hat{\theta})$ may be maximized with respect to $\pi_{t,k}$ under constraints $\sum_{j=1}^{K} \pi_{t,j} = 1$:

$$\frac{\delta Q\big(\theta, \hat{\theta}\big)}{\delta \pi_{t,k}} = \frac{\delta}{\delta \pi_{t,k}} \sum_{j=1}^{K} \sum_{t=1}^{T} \sum_{n=1}^{N_t} p\big(c_{n,t} = j\big|\phi_{n,t}, \hat{\theta}\big) \log \pi_{t,j} + \lambda \left( \sum_{j=1}^{K} \pi_{t,j} - 1 \right)$$

$$= \frac{\sum_{n=1}^{N_t} p(c_{\_}\{n,t\} = k|\phi_{n,t}\theta)}{\pi_{t,k}} + \lambda \stackrel{!}{=} 0$$

The mixing weights $\pi_{t,k}$ may be determined by equation (4):

$$\pi_{t,k} = \frac{\sum_{n=1}^{N_t} p(c_{\_}\{n,t\} = k|\phi_{n,t}, \hat{\theta})\}}{N_t} \quad (4).$$

In the maximization step, the $Q(\theta, \hat{\theta})$ may be maximized with respect to transition matrix $A_k$:

$$\frac{\delta Q\big(\theta, \hat{\theta}\big)}{\delta A_k} = \frac{\delta}{\delta A_k} \sum_{t=2}^{T} \sum_{k=1}^{K} \log \mathcal{N}\big(m_{t,k}\big|A_k m_{t-1,k}, \Sigma^{trans}\big)$$

$$= -\frac{1}{2} \sum_{t=2}^{T} \frac{\delta}{\delta A_k} \mathbb{E}_m \left[ \big(m_{t,k} - A_k m_{t-1,k}\big)^T (\Sigma^{trans})^{-1} \big(m_{t,k} - A_k m_{t-1,k}\big) \right]$$

$$= -\frac{1}{2} \sum_{t=2}^{T} \mathbb{E}_m \left[ -2(\Sigma^{trans})^{-1} \big(m_{t,k} - A_k m_{t-1,k}\big) m_{t-1,k}^T \right] \stackrel{!}{=} 0.$$

With this, the transition matrix $A_k$ may be determined by equation (5):

$$A_k = \left( \sum_{t=2}^{T} E_m\big[m_{t,k} m_{t-1,k}^T\big] \right) \left( \sum_{t=2}^{T} E_m\big[m_{t-1,k} m_{t-1,k}^T\big] \right)^{-1} \quad (5).$$

In the maximization step, the $Q(\theta, \hat{\theta})$ may be maximized with respect the transition covariance $\Sigma^{trans}$:

$$\frac{\delta Q(\theta, \hat{\theta})}{\delta \Sigma^{trans}} = \frac{\delta}{\delta \Sigma^{trans}} E_m \left[ \sum_{t=2}^{T} \sum_{k=1}^{K} \log \mathcal{N} \left( \mathbf{m_{t,k}} | \mathbf{A_k m_{t-1,k}}, \Sigma^{trans} \right) | \mathbf{A_k m_{t-1,k}}, \Sigma^{trans} \right)$$

$$= -\frac{(T-1)K}{2} \frac{\delta}{\delta \Sigma^{trans}} \log |\Sigma^{trans}|$$

$$- \frac{1}{2} \sum_{k=1}^{K} \sum_{t=2}^{T} \frac{\delta}{\delta \Sigma^{trans}} E_m \left[ \left( m_{t,k} - A_{k m_{t-1,k}} \right)^T (\Sigma^{trans})^{-1} \left( m_{t,k} - A_{k m_{t-1,k}} \right) \right]$$

$$= -\frac{(T-1)K}{2} (\Sigma^{trans})^{-1}$$

$$+ \frac{1}{2} \sum_{k=1}^{K} \sum_{t=2}^{T} (\Sigma^{trans})^{-1} E_m \left[ \left( m_{t,k} - A_{k m_{t-1,k}} \right) \left( m_{t,k} - A_{k m_{t-1,k}} \right)^T \right] (\Sigma^{trans})^{-1} \overset{!}{=} 0$$

With this, the transition covariance $\Sigma^{trans}$ may be determined by equation (6):

$$\Sigma^{trans} = \frac{1}{(T-1)K} \sum_{k=1}^{K} \sum_{t=2}^{T} E_m \left[ m_{t,k m_{t,k}^T} \right] - E_m \left[ m_{t,k m_{t-1,k}^T} \right] A_k^T - A_k E_m \left[ m_{t-1,k m_{t,k}^T} \right]$$

$$+ A_k E_m \left[ m_{t-1,k m_{t-1,k}^T} \right] A_k^T \quad (6).$$

In the maximization step, the $Q(\theta, \hat{\theta})$ may be maximized with respect the observation covariance $\Sigma^{obs}$:

$$\frac{\delta Q(\theta, \hat{\theta})}{\delta \Sigma^{obs}} = \frac{\delta}{\delta \Sigma^{obs}} \sum_{k=1}^{K} \sum_{t=1}^{T} \sum_{n=1}^{N_t} p(c_{n,t} = k | \phi_{n,t}, \hat{\theta}) E_m \left[ \log \mathcal{N} \left( \phi_{n,t} | m_{t,k}, \Sigma^{obs} \right) \right]$$

$$= \frac{\delta}{\delta \Sigma^{obs}}$$

$$- \frac{1}{2} \sum_{k=1}^{K} \sum_{t=1}^{T} \sum_{n=1}^{N_t} p(c_{n,t} = k | \phi_{n,t}, \hat{\theta}) \log |\Sigma^{obs}|$$

$$+ E_m \left[ \left( \phi_{n,t} - m_{t,k} \right)^T (\Sigma^{obs})^{-1} \left( \phi_{n,t} - m_{t,k} \right) \right]$$

$$= -\frac{1}{2} \sum_{k=1}^{K} \sum_{t=1}^{T} \sum_{n=1}^{N_t} p(c_{\_}\{n,t\} = k | \phi_{n,t}, \hat{\theta}) \frac{\delta}{\delta \Sigma^{obs}} |\Sigma^{obs}|$$

$$- \frac{1}{2} \sum_{k=1}^{K} \sum_{t=1}^{T} \sum_{n=1}^{N_t} \frac{\delta}{\delta \Sigma^{obs}} E_m \left[ \left( \phi_{n,t} - m_{t,k} \right)^T (\Sigma^{obs})^{-1} \left( \phi_{n,t} - m_{t,k} \right) \right]$$

$$= -\frac{1}{2} \sum_{k=1}^{K} \sum_{t=1}^{T} \sum_{n=1}^{N_t} p(c_{\_}\{n,t\} = k | \phi_{n,t}, \widehat{\theta}) (\Sigma^{obs})^{-1}$$

$$+ \frac{1}{2} \sum_{k=1}^{K} \sum_{t=1}^{T} \sum_{n=1}^{N_t} (\Sigma^{obs})^{-1} E_m \left[ \left( \phi_{n,t} - m_{t,k} \right) \left( \phi_{n,t} - m_{t,k} \right)^T \right] (\Sigma^{obs})^{-1} \overset{!}{=} 0$$

With this, the observation covariance $\Sigma^{obs}$ may be determined by equation (7):

$$\Sigma^{obs}$$

$$= \frac{\sum_{k=1}^{K} \sum_{t=1}^{T} \sum_{n=1}^{N_t} p(c_{\_}\{n,t\} = k | \phi_{n,t}, \widehat{\theta}) \left( \phi_{n,t \phi_{n,t}^T} - E_m[m_{t,k}] \phi_{n,t}^T - \phi_{n,t} E_m[m_{t,k}]^T + E_m \left[ m_{t,k m_{t,k}^T} \right] \right)}{\sum_{k=1}^{K} \sum_{t=1}^{T} \sum_{n=1}^{N_t} p(c_{n,t} = k | \phi_{n,t}, \hat{\theta})} \quad (7).$$

Illustratively, the parameters θ 312 of the feature dynamics model 310 may be determined using the features 308(t=t*) of the respective data element 304(t=t*) and the features 308(t=t<t*) of one or more other data elements 304(t=t<t*) temporally preceding the respective data element. In some aspects, the one or more data elements include all data elements (from t=1 to t=t*-1) temporally preceding the respective data element 304(t=t*). In other aspects, the one or more data elements include predefined number of data elements temporally directly preceding the respective data element. FIG.3 shows the directly preceding data element 304(t=t*-1) as an example of the one or more data elements.

Having the parameters θ 312 $(\theta = \{A_k, \Sigma_{0,k}, \mu_{0,k}, \{\pi_{t,k}\}_{t=1}^{T}\}_{k=1}^{K})$ and the initial class mean vector $m_{1,k} \sim \mathcal{N}(m_{1,k}|\mu_{0,k}, \Sigma_{0,k})$ allows to propagate the mean forward for all time steps from t=2 to t=T by $m_{t,k} = A_k m_{t-1,k} + v$ with $v \sim \mathcal{N}(0, \Sigma^{trans})$ and allows to determine $c_{n,t} \sim p(\pi_t)$ with $\sum_{k=1}^{K} \pi_{t,k} = 1$ and $\phi_{n,t} \sim \mathcal{N}(\phi|m_{t,c_{n,t}}, \Sigma^{obs})$.

According to various aspects, the method 200 may include that a class 314(t=t*) associated with the respective data element 304(t=t*) is determined using the feature dynamics model 310.

In some aspects, the method 200 may include that the class 314(t=t*) associated with the respective data element 304(t=t*) is determined directly by the feature dynamics model 310 (i.e., without using the classifier 402). In this case, the class k* of the plurality of class k=1 to K having the greatest posterior class probability $p(c_{n,t} = k|\phi_{n,t}, \theta)$ is determined as the class 314(t=t*) associated with the respective data element 304(t=t*). The posterior class probability $p(c_{n,t} = k|\phi_{n,t}, \theta)$ may represent a probability that the respective class k is associated with the respective data element 304(t=t*). This approach may be referred to as soft classification.

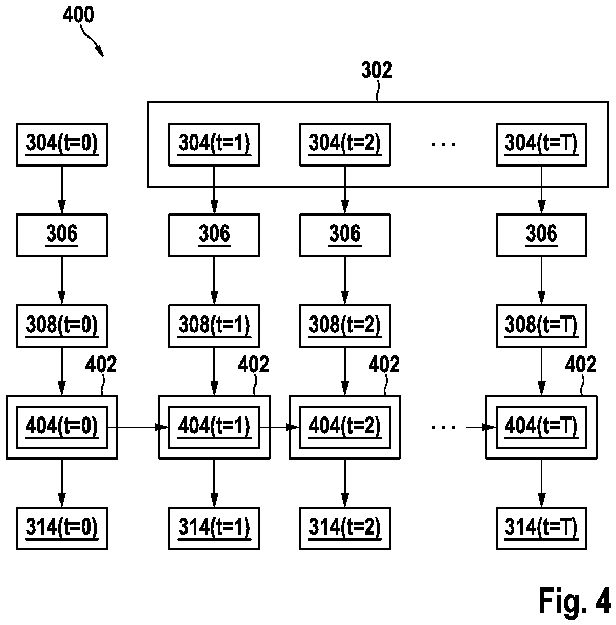

In other aspects, the feature dynamics model 310 may be employed to adapt weights of the classifier 402 as, for example, shown in **FIG.4**. In this case, the class 314(t=t*) associated with the respective data element 304(t=t*) may be determined by the classifier 402 having the adapted weights 404(t=t*). At a corresponding time step, t*, the feature dynamics model 310 may be updated using the features 308(t=t*) as output by the feature extractor 306 and then the weights 404(t=t*-1) associated with a time step, t*-1, directly preceding the corresponding time step, t*, may be adapted using the feature dynamics model 310. By this, the weights 404(t=t*-1) of the classifier 402 which are associated with the time step, t*-1, directly preceding the corresponding time step, t*, may be adapted as a function of the (feature) distribution shift between the features 308(t=t*-1) of the data element 304(t=t*-1) associated with the directly preceding time step, t*-1, and the features 308(t=t*) of the respective data element 304(t=t*).

According to various aspects, the weights 404 may be adapted as a function of the posterior distribution $p(m_{t,k}|\Phi_1, ..., \Phi_T)$ over the means $m_{t,k}$ of the Gaussian functions. As an example, the posterior mean $m_{t,k}$ may be used as new weight vector 404 of the classifier 402 (e.g., as final layer of the machine-learning model). The features 308(t=t*) of the respective data element 304(t=t*) may be then input into the classifier 402 having the adapted weights 404(t=t*) to determine (e.g., output) the class 314(t=t*) associated with the respective data element 304(t=t*).

Illustratively, the (classification) weights 404(t) of the classifier 402 may be adapted sequentially at each time step, t=t*, over time, t, using the weights of the temporally directly preceding time step, t=t*-1, and the extracted features 308(t=t*) of the current time step, t*. By this, the classification weights 404 can be adapted in an unsupervised manner. This allows that the weights mimic the evolution of the feature density and, thus, a potential covariate distribution shift. Optionally, the weights may be normalized by dividing their respective value with a (vector) length of the feature vector.

As detailed herein, in some cases, there may be no gradual distribution shift but a hard distribution shift, for example due to a sensor malfunction, measurement errors, etc. According to various aspects, the adaption of the classification weights 404 may be skipped in the case of such a hard distribution shift. Thus, in this case the weights 404(t=t*) of the corresponding time step t* may be the same as the weights 404(t=t*-1) of the directly preceding time step t=t*-1. For this, a measure of a degree of the distribution shift may be employed, such as a maximum probability, an entropy, etc.

In the example of the entropy, an entropy value representing the entropy $H_t^{cluster}$ of the (determined) posterior class probabilities $p(c_{n,t} = k|\phi_{n,t}, \hat{\theta})$ for the K classes may be determined and the weights 404 of the classifier 402 may be adapted only in the case that the entropy value is equal to or less than a predefined entropy threshold value. The entropy $H_t^{cluster}$ of the (determined) posterior class probabilities $p(c_{n,t} = k|\phi_{n,t}, \hat{\theta})$ for the K classes may be determined by:

$$H_t^{cluster} = -\frac{1}{N_t} \sum_{n=1}^{N_t} \sum_{k=1}^{K} p\left(c_{n,t} = k|\hat{\theta}\right) \log p\left(c_{n,t} = k|\hat{\theta}\right).$$

By this, a potential degradation of the performance of the feature dynamics model 310 can be avoided by not adapting the weights if an uncertainty is too low. Illustratively, an entropy value above the predefined entropy threshold value may indicate a potential failure of the feature dynamics model 310.

Illustratively, the feature dynamics model 310 models the features 308 as output by the feature extractor 306 (by a Gaussian mixture model, see equation (1)). This allows to track a distribution shift of the features 308 in feature space (e.g., using Kalman filters in accordance with (2)) and then employ this distribution shift in the classification of the respective data element 304(t=t*) (e.g., via adapting the classification weights 404 of the classifier 402). Modelling the evolution of the feature density over time can also prevent forgetting in the adaptation process since the allowed dynamics can be constrained. Forgetting may also be further prevented using the Kalman filter update which incorporates new information and old knowledge (in an optimal manner).

A method for controlling a robot (e.g., the vehicle 100 or another robotic device) may include acquiring sensor data (e.g., which represent a surrounding of the robot (e.g., an image (e.g., acquired using one or more sensors as described herein) which shows one or more objects in the vicinity of the robot)). The method for controlling the robot may include feeding the sensor data (e.g., the image) into a robot control model (e.g., including the machine-learning model described herein) to detect the one or more objects, and controlling the robot (e.g., the vehicle 100) taking into account the detected one or more objects (e.g., controlling the vehicle 100 to avoid the one or more objects, to adjust its velocity, etc.).

While in the above embodiments, the approach of FIG.2 is applied to control the vehicle 100, it may be applied for computing a control signal for controlling any technical system in a scenario where object hierarchy plays a role, thus any a computer-controlled machine, like a robot, a domestic appliance, a power tool, a manufacturing machine, a personal assistant or an access control system.

## Claims

1. A computer-implemented method (200) for classifying data elements (304) of a data set (302) using a machine-learning model, wherein the machine-learning model comprises a feature extractor (306) configured to determine features (308) of a data element (304) and comprises a classifier (402) configured to classify the data element (304) using the features (308), the method (200) comprising:

   classifying (202) the data elements (304) of the data set (302) which is associated with a time sequence, wherein each data element is associated with a corresponding time step of the time sequence, wherein the data elements (304) are classified by inputting them into the machine-learning model one after the other according to their temporal order, wherein classifying a respective data element of the data elements comprises:

   • determining (202A) features of the respective data element using the feature extractor (306);
   • determining (202B), using the features of the respective data element and the features of one or more other data elements temporally preceding the respective data element, parameters (312) of a feature dynamics model (310) which represents an evolution of a feature density of the features over time; and
   • determining (202C) a class (314) associated with the respective data element using the feature dynamics model (310).

2. The method (200) according to claim 1,
   wherein determining (202C) the class (314) associated with the respective data element using the feature dynamics model (310) comprises:

   • adapting, using the feature dynamics model, weights (404) of the classifier (402); and
   • determining the class (314) associated with the respective data element using the classifier (402) having the adapted weights.

3. The method (200) according to claim 2, wherein adapting the weights (404) using the feature dynamics model (310), comprises:

   • adapting the weights of the classifier (402) which are associated with the directly preceding time step as a function of a feature distribution shift between the features of the data element associated with the directly preceding time step and the features of the respective data element.

4. The method (200) according to claim 2 or 3,
   wherein determining (200C) the class (314) associated with the respective data element using the feature dynamics model (310) comprises:

• for each class of a plurality of classes associated with the classification, determining, using the feature dynamics model (310), a posterior class probability representing a probability that the class is associated with the respective data element;

• determining an entropy value representing an entropy of the posterior class probabilities; and

• adapting the weights of the classifier only in the case that the entropy value is equal to or less than a predefined entropy threshold value.

5. The method (200) according to claim 1, wherein determining (202C) the class (314) associated with the respective data element using the feature dynamics model (310) comprises:

• for each class of a plurality of classes associated with the classification, determining, using the feature dynamics model, a posterior class probability representing a probability that the class is associated with the respective data element; and

• determining the class of the plurality of class for which the greatest posterior class probability is determined as the class associated with the respective data element.

6. The method (200) according to any one of claims 1 to 5, wherein determining (202B) the feature dynamics model (310) comprises:

• modeling the evolution of the feature density of the features over time by a Gaussian mixture model with a respective Gaussian function for each class of a plurality of classes associated with the classification, wherein the evolution of a respective mean of each Gaussian function is modeled as a linear Gaussian system with its parameters being tracked by a corresponding Kalman filter.

7. The method (200) according to claim 6, wherein the parameters of the feature dynamics model (310) are determined using an expectation-maximization algorithm, wherein the expectation step of the expectation-maximization algorithm comprises a Kalman forward-backward-recursion.

8. The method (200) according to claim 6 or 7 provided that in combination with claim 3, wherein the weights are adapted by:

• determining a posterior distribution over the means of the Gaussian functions associated with the corresponding time step of the respective data element; and

• adapting the weights which are associated with the directly preceding time step as a function of the posterior distribution.

9. The method (200) according to claim 8,

wherein the features of a respective data element are represented by a feature vector; and

wherein adapting the weights associated with the directly preceding time step as a function of the posterior distribution further comprises a normalization of the weights by dividing them with a length of the feature vector.

10. The method (200) according to any one of claims 1 to 9, wherein the machine-learning model has been trained using a training data set which is associated with a prior time sequence or a point in time that temporally precedes the time sequence associated with the data set.

11. The method (200) according to any one of claims 1 to 10, wherein the one or more other data elements temporally preceding the respective data element comprise:

• all data elements temporally preceding the respective data element; or

• a predefined number of data elements temporally directly preceding the respective data element.

12. The method (200) according to any one of claims 1 to 11, wherein the corresponding time step the data element which temporally directly succeeds the respective data element is associated with is temporally after a point in time at which the respective data element is classified.

**13.** A data processing device configured to carry out the method (200) of any one of claims 1 to 12.

**14.** A computer program comprising instructions which, when executed by a computer, causes the computer to carry out the method (200) according to any one of claims 1 to 12.

**15.** A computer-readable medium comprising instructions which, when executed by a computer, causes the computer to carry out the method (200) according to any one of claims 1 to 12.

**Amended claims in accordance with Rule 137(2) EPC.**

**1.** A method for controlling a robotic device using a machine-learning model, wherein the machine-learning model comprises a feature extractor (306) configured to determine features (308) of a data element (304) and comprises a classifier (402) configured to classify the data element (304) using the features (308), the method comprising:

acquiring sensor data which represent one or more objects in a surrounding of the robotic device (100) over time, thereby providing data elements (304) of a data set (302) which is associated with a time sequence, wherein each data element is associated with a corresponding time step of the time sequence;
classifying (202) the data elements (304) of the data set (302), wherein the data elements (304) are classified by inputting them into the machine-learning model one after the other according to their temporal order, wherein classifying (200) a respective data element of the data elements comprises:

• determining (202A) features of the respective data element using the feature extractor (306);
• determining (202B), using the features of the respective data element and the features of one or more other data elements temporally preceding the respective data element, parameters (312) of a feature dynamics model (310) which represents an evolution of a feature density of the features over time; and
• determining (202C) a class (314) associated with the respective data element using the feature dynamics model (310); and

controlling the robot device taking into account a result of the classification.

**2.** The method according to claim 1,
wherein determining (202C) the class (314) associated with the respective data element using the feature dynamics model (310) comprises:

• adapting, using the feature dynamics model, weights (404) of the classifier (402); and
• determining the class (314) associated with the respective data element using the classifier (402) having the adapted weights.

**3.** The method according to claim 2,
wherein adapting the weights (404) using the feature dynamics model (310), comprises:

• adapting the weights of the classifier (402) which are associated with the directly preceding time step as a function of a feature distribution shift between the features of the data element associated with the directly preceding time step and the features of the respective data element.

**4.** The method according to claim 2 or 3,
wherein determining (200C) the class (314) associated with the respective data element using the feature dynamics model (310) comprises:

• for each class of a plurality of classes associated with the classification, determining, using the feature dynamics model (310), a posterior class probability representing a probability that the class is associated with the respective data element;
• determining an entropy value representing an entropy of the posterior class probabilities; and
• adapting the weights of the classifier only in the case that the entropy value is equal to or less than a predefined entropy threshold value.

**5.** The method according to claim 1,
wherein determining (202C) the class (314) associated with the respective data element using the feature dynamics model (310) comprises:

- for each class of a plurality of classes associated with the classification, determining, using the feature dynamics model, a posterior class probability representing a probability that the class is associated with the respective data element; and
- determining the class of the plurality of class for which the greatest posterior class probability is determined as the class associated with the respective data element.

6. The method according to any one of claims 1 to 5,
wherein determining (202B) the feature dynamics model (310) comprises:

- modeling the evolution of the feature density of the features over time by a Gaussian mixture model with a respective Gaussian function for each class of a plurality of classes associated with the classification, wherein the evolution of a respective mean of each Gaussian function is modeled as a linear Gaussian system with its parameters being tracked by a corresponding Kalman filter.

7. The method according to claim 6,
wherein the parameters of the feature dynamics model (310) are determined using an expectation-maximization algorithm, wherein the expectation step of the expectation-maximization algorithm comprises a Kalman forward-backward-recursion.

8. The method according to claim 6 or 7 provided that in combination with claim 3,
wherein the weights are adapted by:

- determining a posterior distribution over the means of the Gaussian functions associated with the corresponding time step of the respective data element; and
- adapting the weights which are associated with the directly preceding time step as a function of the posterior distribution.

9. The method according to claim 8,

wherein the features of a respective data element are represented by a feature vector; and
wherein adapting the weights associated with the directly preceding time step as a function of the posterior distribution further comprises a normalization of the weights by dividing them with a length of the feature vector.

10. The method according to any one of claims 1 to 9,
wherein the machine-learning model has been trained using a training data set which is associated with a prior time sequence or a point in time that temporally precedes the time sequence associated with the data set.

11. The method according to any one of claims 1 to 10,
wherein the one or more other data elements temporally preceding the respective data element comprise:

- all data elements temporally preceding the respective data element; or
- a predefined number of data elements temporally directly preceding the respective data element.

12. The method according to any one of claims 1 to 11,
wherein the corresponding time step the data element which temporally directly succeeds the respective data element is associated with is temporally after a point in time at which the respective data element is classified.

13. A data processing device configured to carry out the method of any one of claims 1 to 12.

14. A computer program comprising instructions which, when executed by a computer, causes the computer to carry out the method (200) according to any one of claims 1 to 12.

15. A computer-readable medium comprising instructions which, when executed by a computer, causes the computer to carry out the method (200) according to any one of claims 1 to 12.

**100**

**110**

**110**

**110**

**110**

**110**

**104** **108**

**106** **102**

**112**

EP 4 645 118 A1

**Fig. 1**

Fig. 2

**Fig. 3**

**400**

**302**

| 304(t=0) | | 304(t=1) | 304(t=2) | · · · | 304(t=T) |
|---|---|---|---|---|---|

| 306 | 306 | 306 | | 306 |
|---|---|---|---|---|

| 308(t=0) | 308(t=1) | 308(t=2) | | 308(t=T) |
|---|---|---|---|---|

**402** **402** **402** **402**

| 404(t=0) | → | 404(t=1) | → | 404(t=2) | · · · → | 404(t=T) |
|---|---|---|---|---|---|---|

| 314(t=0) | 314(t=1) | 314(t=2) | | 314(t=T) |
|---|---|---|---|---|

**Fig. 4**

| | Europäisches Patentamt European Patent Office Office européen des brevets | **EUROPEAN SEARCH REPORT** | **Application Number** EP 24 17 3315 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wu Ruihan ET AL: "Online Adaptation to Label Distribution Shift", arXiv (Cornell University), 9 July 2021 (2021-07-09), pages 1-20, XP093208899, DOI: 10.48550/arxiv.2107.04520 Retrieved from the Internet: URL:https://arxiv.org/pdf/2107.04520v1 * abstract * * page 2, line 15 - line 18 * * page 2, line 49 - page 3, line 12 * * page 8, line 25 - page 9, line 11 * * Framework 1 and 2 * ----- | 1-15 | INV. G06F16/906 G06N3/00 |
| X | WO 2024/050207 A1 (QUALCOMM INC [US]) 7 March 2024 (2024-03-07) * abstract * * paragraph [0004] - paragraph [0009] * * paragraph [0027] - paragraph [0031] * * paragraph [0085] - paragraph [0096] * * figure 3D * ----- | 1-15 | |
| | | | TECHNICAL FIELDS SEARCHED (IPC) |
| X | Titsias Michalis K ET AL: "Kalman Filter for Online Classification of Non-Stationary Data", , 14 June 2023 (2023-06-14), pages 1-17, XP093208750, Retrieved from the Internet: URL:https://arxiv.org/pdf/2306.08448 * abstract * * Section 2 * * Section 2.1 * * Section 4.1 * * Section 4.2 * ----- -/-- | 1-15 | G06F G06N |

The present search report has been drawn up for all claims

| Place of search | Date of completion of the search | Examiner |
|---|---|---|
| Berlin | 27 September 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 24 17 3315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Schirmer Mona ET AL: "Test-Time Adaptation with State-Space Models", , 17 July 2024 (2024-07-17), pages 1-18, XP093207654, Retrieved from the Internet: URL:https://arxiv.org/pdf/2407.12492 * the whole document * ----- | 1-15 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Berlin | 27 September 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3315

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| WO 2024050207 A1 | 07-03-2024 | NONE | |

For more details about this annex : see Official Journal of the European Patent Office, No. 12/82